# EUROPÄISCHE PATENTSCHRIFT

(11) **EP 1 194 921 B1**
(45) Veröffentlichungstag und Bekanntmachung des Hinweises auf die Patenterteilung: **10.03.2004**
(21) Anmeldenummer: 00934887.1
(22) Anmeldetag: 11.04.2000
(51) Int. Cl.: G10L 13/08, G10L 15/06

(54) **VERFAHREN UND VORRICHTUNG ZUR SPRACHVERARBEITUNG**
METHOD AND DEVICE FOR SPEECH PROCESSING
PROCEDE ET DISPOSITIF DE TRAITEMENT DE LA PAROLE

(30) Priorität: 06.07.1999 DE 19931050
(43) Veröffentlichungstag der Anmeldung: 10.04.2002
(73) Patentinhaber: SIEMENS AKTIENGESELLSCHAFT, 80333 München (DE)
(72) Erfinder: NIEDERMAIR, Gerhard, D-85256 Vierkirchen (DE)
(86) Internationale Anmeldenummer: PCT/DE2000/001116
(87) Internationale Veröffentlichungsnummer: WO 2001/003111

(56) Entgegenhaltungen:
- EP-A- 0 727 767
- MENG H ET AL: "Reversible letter-to-sound/sound-to-letter generation based on parsing word morpology" SPEECH COMMUNICATION,NL,ELSEVIER SCIENCE PUBLISHERS, AMSTERDAM, Bd. 18, Nr. 1, 1996, Seiten 47-63, XP004008922 ISSN: 0167-6393
- CARLSON R ET AL: "SEGMENTAL INTELLIGIBILITY OF SYNTHETIC AND NATURAL SPEECH IN REAL AND NONSENSE WORDS" PROCEEDINGS OF THE INTERNATIONAL CONFERENCE ON SPOKEN LANGUAGE PROCESSING (ICSLP),JP,TOKYO, ASJ, 18. November 1990 (1990-11-18), Seiten 989-992, XP000506929

## Beschreibung

Die Entwicklung alltagstauglicher Spracherkennungs- und Sprachsteuersysteme stellt seit Jahren eine der Hauptentwicklungslinien der Computertechnik dar. Im Zuge dieser Entwicklung wurden erhebliche Fortschritte erreicht und marktfähige Spracherkennungssysteme etabliert, die sich im praktischen Einsatz auch bewähren. Fortgeschrittene Systeme dieser Art sind auch grundsätzlich zur Sprachsteuerung eines Computers bzw. von angeschlossenen Peripheriegeräten geeignet. Einfache Spracherkennungssysteme, die allerdings nur ein relativ geringes Vokabular verarbeiten können, werden auch bereits in den Bereichen Konsumelektronik und KFZ-Ausrüstung sowie weiteren Bereichen eingesetzt, in denen eine akustische Steuerung von Geräten aufgrund eines begrenzten Vokabulars möglich und sinnvoll ist.

Bei Spracherkennungssystemen gibt es in der Regel Werkzeuge, mit denen das vom Spracherkennungssystem zu erkennende Vokabular eingegeben werden kann. In der Regel werden die Wörter oder Außerungen über eine entsprechende Oberflächen-Software des Computerprogramms in orthographischer Schreibweise eingegeben und in die interne Schreibweise des Spracherkennungssystem (meist eine Variante von phonetischer Umschrift (Lautschrift)) automatisch umgesetzt. Bei diesem automatischen oder durch Lexikon-Look-Up unterstützten Konversionsprozeß können Fehler in der phonetischen Umschrift entstehen, die aus unzulänglichen Umsetzungsregeln und/oder unvollständigen Lexika herrühren. Da das Spracherkennungssystem seinen Erkennungsprozeß auf der Basis dieser so erzeugten phonetischen Umschrift aufbaut, entstehen durch eine falsche phonetische Umschrift auch Fehler bei der Spracherkennung.

Ein bekanntes Verfahren zur Umsetzung einer orthografischen Eingabe in eine phonetische Umschrift wird in der Veröffentlichung Helen Meng et al.: "Reversible letter-to-sound sound-to-letter generation based on parsing word morphology", speech Communication 18 (1996), seiten 47-63 offenbart.

Um eine optimale Performance zu gewährleisten, muß dafür Sorge getragen werden, daß die phonetische Umschrift möglichst lückenlos korrekt ist.

Das Problem wurde bisher dadurch gelöst, daß der Benutzer nach Eingabe der orthographischen (korrekten) Schreibweise die vom System erzeugte phonetische Umschrift manuell prüfen konnte. Dies ist für ungeschultes Personal aber in der Regel schwierig. Daher wurden verschiedene Hilfsmittel benutzt, die in der marktgängigen SW angeboten sind:
1. Der Benutzer kann sich für die verschiedenen lautlichen Symbole typische Wörter, in denen solche Symbole enthalten sind, anzeigen lassen und die phonetische Schreibweise manuell korrigieren. Hierbei wird er bei manchen Systemen noch dahingehend unterstützt, daß keine falschen Zeichensequenzen der phonetischen Umschrift verwendet werden können, indem durch die eingesetzte Software nur solche Zeichenketten eingegeben werden können, die eine gültige ASCII-Folge für den verwendeten phonetischen Zeichensatz darstellen.
2. Aus der phonetischen Schreibweise wird mit Hilfe von gängigen Text-to-Speech-Softwaresystemen, also Sprachsyntheseverfahren, die phonetische Umschrift wieder in eine hörbare Sprache umgesetzt. Dies dient dem akustischen Plausibilitätscheck der Phonemkette, die vom System für ein Wort automatisch erzeugt wurde. Dieser Hörtest kann jedoch nur drastische Fehler eliminieren und unterliegt den Unzulänglichkeiten des akustischen Kanals. Des weiteren ist eine Übereinstimmung der verwendeten phonetischen Alphabete der Spracherkennung wie auch der Sprachsynthese zu gewährleisten, was in den wenigsten Fällen gegeben ist.

Der Erfindung liegt daher die Aufgabe zugrunde, ein verbessertes Verfahren bzw. eine Vorrichtung zur Sprachverarbeitung anzugeben, die sich insbesondere durch wesentlich verbesserte Nutzerfreundlichkeit und im Zusammenhang hiermit auch durch erhöhte Genauigkeit und Zuverlässigkeit auszeichnen.

Diese Aufgabe wird hinsichtlich ihres Verfahrensaspektes gelöst durch ein Verfahren mit den Merkmalen des Anspruchs 1 und hinsichtlich ihres Vorrichtungsaspektes durch eine Vorrichtung mit den Merkmalen des Anspruchs 6.

Die Erfindung schließt den wesentlichen Gedanken ein, anstelle der für den sprachwissenschaftlich ungeschulten Benutzer ungewohnten und nur schwer handhabbaren Ausgabe eines in phonetische Umschrift umgesetzten Wortes in dieser phonetischen Umschrift (Lautschrift) eine einfache und zuverlässiger handhabbare Ausgabe vorzusehen. Sie schließt weiter den Gedanken ein, hierzu eine als "pseudo-orthographisch" zu bezeichnende Ausgabeform zu wählen, die vom Benutzer nicht die Kenntnis von Sonderzeichen der phonetischen Umschrift und von deren speziellen Regeln erfordert. Vereinfacht gesagt, erfolgt die Ausgabe der umgesetzten Worte "so, wie man sie spricht".

Diese auch für den Laien leicht verständliche und gut zu handhabende pseudo-orthographische Ausgabe einer in phonetische Umschrift umgesetzten Sprache erfordert einen zusätzlichen Schritt im Sprachverarbeitungsverfahren, nämlich den Schritt der Umsetzung aus der phonetischen Umschrift in diese pseudo-orthographische Darstellung. Dieser zusätzliche Schritt beinhaltet ein Verfahren, bei dem in selbstlernender Weise oder unter Zugriff auf ein vorbestimmtes Regelwerk die phonetischen Einheiten der Worte in einfache graphematische Einheiten von geschriebener Schrift umgesetzt werden. Diese Umsetzung geschieht in einer einfachen und zweckmäßigen Ausführung unter Zugriff auf eine gespeicherte Phonem-Graphem-Zuordnungstabelle, die mindestens mit einem Anfangsbestand an Zuordnungsvorschriften initialisiert und ggfs. im Zuge eines Selbstlernprozesses während der Anwendung des Systems aufgrund zusätzlicher Eingaben durch den Nutzer erweiterbar ist.

In einer besonders komfortablen und im Sinne des erwähnten Selbstlernprozesses vorteilhaften Ausführung umfaßt das Verfahren noch einen weiteren Umsetzungsschritt der umgekehrten Umsetzung aus einer (durch den Nutzer bei einer Eingabe zur Korrektur des primären Umsetzungsergebnisses benutzten) pseudo-orthographischen Darstellung in die phonetische Umschrift. Auch bei diesem Schritt kann die erwähnte tabellarische Zuordnung genutzt und ggfs. im Zuge eines Selbstlernprozesses ergänzt und verfeinert werden.

Entsprechend den oben angegebenen Verfahrensmerkmalen weist eine Vorrichtung zur Durchführung des vorgeschlagenen Verfahrens neben einer an sich bekannten ersten Umsetzereinheit zur Umsetzung einer orthographischen Eingabe in die phonetische Umschrift eine zweite Umsetzereinheit zur Umsetzung aus der phonetischen Umschrift in die erwähnte pseudo-orthographische Darstellung und eine Ausgabeeinheit zur Ausgabe in dieser Darstellungsform auf.

Für die erwähnte Fortbildung des Verfahrens, die dem Benutzer eine korrigierende Eingabe unter Nutzung der pseudo-orthographischen Darstellung ermöglicht, weist die Vorrichtung eine entsprechende dritte Umsetzereinheit auf.

Zur Anwendung der erwähnten Phonem-Graphem-Zuordnungstabelle verfügt die Vorrichtung in einer bevorzugten Ausführungsform über einen entsprechenden Speicher, in dem diese Zuordnungstabelle für die zweite und/oder dritte Umsetzereinheit zugreifbar gehalten wird.

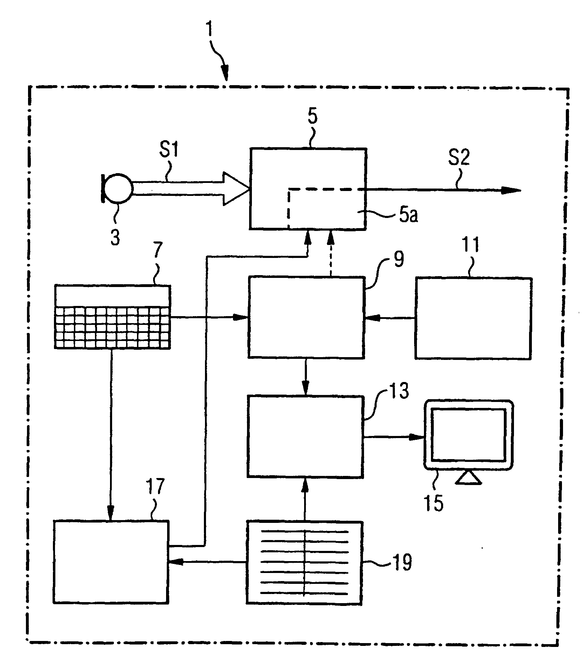

Vorteile und Zweckmäßigkeiten der Erfindung ergeben sich im übrigen aus den Unteransprüchen sowie der nachfolgenden Beschreibung einer bevorzugten Ausführungsform anhand der Figur.

Die Figur zeigt eine schematische Darstellung einer Sprachverarbeitungsvorrichtung 1 zur Durchführung des erfindungsgemäßen Verfahrens in einer Ausführungsform in Form eines Funktions-Blockschaltbildes. Die Sprachverarbeitungsvorrichtung 1 umfaßt eine akustische Eingabeeinheit 3, an deren Ausgang ein vorverarbeiteter Sprachstrom S1 bereitsteht, der einem Eingang einer Spracherkennungseinheit 5 zugeführt wird, die einen geschriebenen Text S2 ausgibt. Die Spracherkennungseinheit 5 umfaßt einen Vokabularspeicher 5a, in dem - in der bei herkömmlichen Spracherkennungssystemen üblichen phonetischen Notation - das Vokabular der Spracherkennungseinheit gespeichert ist.

Der Vokabularspeicher 5a wird laufend durch die Eingabe zusätzlicher Begriffe mittels einer alphanumerischen Eingabeeinheit 7 aktualisiert, die aus dem orthographischen Eingabeformat in einer ersten Umsetzereinheit 9 in die phonetische Umschrift (Lautschrift) umgesetzt werden. Ein Lexikonspeicher 11 unterstützt die Umsetzungsprozedur in der ersten Umsetzereinheit 9. Zur Prüfung und Korrektur vorgenommener Eingaben ist eine zweite Umsetzereinheit 13 zur Umsetzung der phonetischen Umschrift in eine pseudo-orthographische Darstellung vorgesehen. Diese wird auf einem Bildschirm 15 für den Benutzer angezeigt.

Weiterhin ist eine dritte Umsetzereinheit 17 zur Umsetzung pseudo-orthographischer Eingaben über die alphanumerische Eingabeeinheit 7 in phonetischer Notation vorgesehen, deren Ausgang mit dem Vokabularspeicher 5a der Spracherkennungseinheit 5 verbunden ist. Der zweiten und dritten Umsetzereinheit 13, 17 ist ein in Form eines Lookup-Table organisierter Zuordnungsspeicher 19 für vorbestimmte Phonem-Graphem-Zuordnungen zugeordnet.

Eine durch den Benutzer erfolgte Eingabe eines neuen Begriffes in korrekt orthographischer Notation wird in der ersten Umsetzereinheit 9 in Lautschrift umgesetzt und kann - je nach konkreter organisation des Systems in dieser Form bereits dem Vokabularspeicher 5a zugeführt werden. In jedem Falle wird das in Lautschrift umgesetzte Wort aber der zweiten Umsetzereinheit 13 zugeführt, wo eine weitere Umsetzung in eine pseudo-orthographische Darstellung erfolgt, die auf dem Bildschirm 15 angezeigt wird und den Benutzer dazu veranlaßt, ggfs. über die Eingabeeinheit 7 - nunmehr in der pseudo-orthographischen Darstellung, die auch auf dem Bildschirm erscheint - eine korrigierende Eingabe zu machen oder aber die angezeigte pseudo-orthographische Darstellung zu bestätigen. Die pseudo-orthographische Eingabe wird in der dritten Umsetzereinheit 17 in Lautschrift umgesetzt und nun (erstmals oder, falls das Wort bereits bei der ersten Eingabe in den Vokabularspeicher 5a übernommen wurden, in einem Korrekturmodus) dem Vokabularspeicher 5a zugeführt. Dessen Inhalt ist damit um eine hinsichtlich der phonetischen Notation geprüfte Vokabel erweitert.

Das oben beschriebene Vorgehen wird nachfolgend an zwei Beispielen erläutert:

### 1. Beispiel

Über die alphanumerische Eingabeeinheit 7 wird in korrekt orthographischer Schreibweise eingegeben: "Jacques Chirac". In der ersten Umsetzereinheit 9 wird daraus die phonetische Notation gebildet: "sh a xk sh i: rr a xk". Die zweite Umsetzereinheit 13 bildet daraus "sch a k sch i r a k", und in dieser Notation wird der eingegebene Name auf dem Bildschirm 15 angezeigt. Aus dieser Darstellung läßt sich - ohne Kenntnis des in der ersten Umsetzung verwendeten phonetischen Alphabets - erkennen, daß die vom System erzeugte phonetische Notation adäquat ist. Der Nutzer kann das Umsetzungsergebnis bestätigen, und der neu eingegebene Name gelangt (in phonetischer Notation) in den Vokabularspeicher 5a.

### 2. Beispiel

Über die Eingabeeinheit 7 wird eingegeben "Professional Service". Die erste Umsetzereinheit 9 erzeugt daraus in phonetischer Notation
"p r o: f ae sh o n :e: ll s oe r v i: cc :e". Im Ergebnis der weiteren Umsetzung in der zweiten Umsetzereinheit 13 ergibt sich daraus in pseudo-orthographischer Notation: "Profäschonell Sörwieke", und diese Darstellung wird wieder auf dem Bildschirm 15 angezeigt.

Der Nutzer erkennt ohne weiteres, daß die vom System erzeugte Lautschrift nicht korrekt sein kann, insofern sie nicht der üblichen Aussprache der eingegebenen Wortkombination entspricht. Der Benutzer wird nun mittels der Eingabeeinheit unter Nutzung der pseudo-orthographischen Notation, die auf dem Schirm dargestellt ist, eine Korrektur vornehmen, und das Korrekturergebnis wird in der dritten Umsetzereinheit 17 aus der pseudo-orthographischen wieder in die phonetische Notation umgesetzt und in dieser in den Vokabularspeicher 5a übernommen. Beim gegebenen Beispiel wird der Benutzer also eingeben "Profäschonnell Sörwis", und entsprechend wird die neue Wortkombination (in phonetischer Notation) im Vokabularspeicher verankert.

Es ist einzusehen, daß das angegebene Verfahren auch mehrschrittig ausgeführt werden kann, indem nach einer ersten Korrektur durch den Benutzer nochmals eine Umsetzung aus der phonetischen Notation in die pseudo-orthographische und eine weitere Anzeige in dieser Darstellung erfolgt, so daß ggfs. Systemfehler iterativ behoben werden können. Bevorzugt ist hierbei die Anwendung eines - an sich bekannten - selbstlernenden Systems etwa in Gestalt eines neuronalen Netzes, mit dem eine Selbstadaption des Speicherinhaltes des Zuordnungsspeichers 19 und/oder der Zuordnungsvorschriften des ersten Umsetzungsvorganges (orthographisch - phonetisch) erfolgen kann.

Die Ausführung der Erfindung ist nicht auf das oben beschrieben Beispiel beschränkt, sondern auch in einer Vielzahl von Abwandlungen möglich, die im Rahmen fachmännischen Handelns liegen.

## Patentansprüche

1. Verfahren zur Sprachverarbeitung, bei dem in einem ersten Umsetzungsschritt eine Umsetzung einer orthographischen Eingabe eines Begriffs in eine phonetische Umschrift erfolgt,
bei dem in einem zweiten Umsetzungsschritt eine Umsetzung aus der phonetischen Umschrift in eine pseudo-orthographische Darstellung und die Ausgabe in dieser Darstellung erfolgt,
und bei dem ein Schritt zur Veranlassung der Prüfung und Korrektur des Umsetzungsergebnisses durch den Nutzer vorgesehen ist.

2. Verfahren nach Anspruch 1,
**gekennzeichnet durch**
einen dritten Schritt der Umsetzung einer in der pseudo-orthographischen Darstellung erfolgten Eingabe in die phonetische Umschrift.

3. Verfahren nach Anspruch 1 oder 2,
**dadurch gekennzeichnet, daß**
der zweite und/oder dritte Umsetzungsschritt eine Umsetzung phonetischer Worteinheiten in einfache graphematische Schrift-Einheiten bzw. umgekehrt umfaßt.

4. Verfahren nach Anspruch 3,
**dadurch gekennzeichnet, daß**
der zweite und/oder dritte Umsetzungsschritt unter Zugriff auf eine gespeicherte Phonem-Graphem-Zuordnungstabelle (19) ausgeführt wird.

5. Verfahren nach Anspruch 3 oder 4,
**dadurch gekennzeichnet, daß**
der zweite und/oder dritte Umsetzungsschritt mittels eines selbstlernenden Verfahrens, insbesondere unter Nutzung eines neuronalen Netzes zur fortlaufenden Aktualisierung der Phonem-Graphem-Zuordnungstabelle (19), ausgeführt wird.

6. Vorrichtung (1) angepasst zur Durchführung aller Schritte des Verfahrens nach einem der vorangehenden Ansprüche, mit einer alphanumerischen Eingabeeinheit (7) und einer eingangsseitig mit dieser verbundenen ersten Umsetzereinheit (9) zur Umsetzung einer orthographischen Eingabe in eine phonetische Umschrift und einer Anzeigeeinheit (15) zur optischen Darstellung eines eingegebenen Wortes,
**gekennzeichnet durch**
eine zweite Umsetzereinheit (13) zur Umsetzung aus der phonetischen Umschrift in eine pseudo-orthographische Darstellung, die ausgangsseitig mit der Anzeigeeinheit verbunden ist.

7. Vorrichtung nach Anspruch 6,
**gekennzeichnet durch**
eine dritte Umsetzereinheit (17) zur Umsetzung einer in der pseudo-orthographischen Darstellung erfolgten Eingabe in die phonetische Umschrift.

8. Vorrichtung nach Anspruch 6 oder 7,
**dadurch gekennzeichnet, daß**
die zweite und/oder dritte Umsetzereinheit (13, 17) mit einem Speicher (19) zur Speicherung einer Phonem-Graphem-Zuordnungstabelle verbunden ist.

9. Vorrichtung nach einem der Ansprüche 6 bis 8,
**dadurch gekennzeichnet, daß**
die zweite Umsetzereinheit (13) ausgangsseitig mit einem Vokabularspeicher (5a) einer Spracherkennungseinheit (5) verbunden ist.

## Claims

1. Method for speech processing, in which an orthographic input of a term is converted into a phonetic transcription in a first conversion step, in which the phonetic transcription is converted into a pseudo-orthographic representation and is output in this representation in a second conversion step, and in which a step for instigating the checking and correcting of the conversion result by the user is provided.

2. Method according to Claim 1, **characterized by** a third step of converting an input performed in the pseudo-orthographic representation into the phonetic transcription.

3. Method according to Claim 1 or 2, **characterized in that** the second and/or third conversion step comprises a conversion of phonetic word units into simple graphemic script units, or vice versa.

4. Method according to Claim 3, **characterized in that** the second and/or third conversion step is executed by accessing a stored phoneme/grapheme assignment table (19).

5. Method according to Claim 3 or 4, **characterized in that** the second and/or third conversion step is executed by means of a self-learning method, in particular by using a neural network for continuous updating of the phoneme/grapheme assignment table (19).

6. Device (1) which is adapted for carrying out all the steps of the method according to one of the preceding claims, having an alphanumeric input unit (7) and a first converter unit (9), connected to the latter on the input side, for converting an orthographic input into a phonetic transcription, and a display unit (15) for optically displaying an input word, **characterized by** a second converter unit (13) for converting from the phonetic transcription into a pseudo-orthographic representation, which is connected on the output side to the display unit.

7. Device according to Claim 6, **characterized by** a third converter unit (17) for converting an input performed in the pseudo-orthographic representation into the phonetic transcription.

8. Device according to Claim 6 or 7, **characterized in that** the second and/or third converter unit (13, 17) is connected to a memory (19) for storing a phoneme/grapheme assignment table.

9. Device according to one of Claims 6 to 8, **characterized in that** the second converter unit (13) is connected on the output side to a vocabulary memory (5a) of a speech recognition unit (5).

## Revendications

1. Procédé de traitement de la parole, dans lequel une conversion d'une entrée orthographique d'un terme en une transcription phonétique s'effectue dans une première étape de conversion, dans lequel, dans une seconde étape de conversion, une conversion dans une représentation pseudo-orthographique s'effectue à partir de la transcription phonétique et la restitution s'effectue dans cette représentation, et dans lequel une étape de déclenchement du contrôle et de la correction du résultat de la conversion par l'utilisateur est prévue.

2. Procédé selon la revendication 1, **caractérisé par** une troisième étape de conversion en transcription phonétique d'une entrée effectuée dans la représentation pseudo-orthographique.

3. Procédé selon la revendication 1 ou 2,
**caractérisé en ce que** la seconde et/ou la troisième étape de conversion comprend une conversion d'unité de mots phonétiques en unités d'écriture graphémiques simples ou inversement.

4. Procédé selon la revendication 3,
**caractérisé en ce que** la seconde et/ou la troisième étape de conversion est effectuée par l'accès à une table de correspondance phonèmes-graphèmes mémorisée (19).

5. Procédé selon la revendication 3 ou 4,
**caractérisé en ce que** la seconde et/ou la troisième étape de conversion est exécutée au moyen d'un procédé autodidacte, notamment en utilisant un réseau neuronal pour l'actualisation permanente de la table de correspondance phonèmes-graphèmes (19).

6. Dispositif (1) adapté à la mise en oeuvre de toutes les étapes du procédé selon l'une des revendications précédentes, à l'aide d'une unité d'entrée (7) alphanumérique et d'une première unité de conversion (9) reliée à celle-ci côté entrée pour la conversion d'une entrée orthographique en une transcription phonétique et à l'aide d'une unité d'affichage (15) pour la représentation optique d'un mot entré, **caractérisé par** une seconde unité de conversion (13) pour la conversion à partir de la transcription phonétique en une représentation pseudo-orthographique, reliée côté sortie à l'unité d'affichage.

7. Dispositif selon la revendication 6, **caractérisé par** une troisième unité de conversion (17) pour la conversion en transcription phonétique d'une entrée effectuée dans la représentation pseudo-orthographique.

8. Dispositif selon la revendication 6 ou 7, **caractérisé en ce que** la seconde et/ou la troisième unité de conversion (13, 17) est reliée à une mémoire (19) pour la mémorisation d'une table de correspondance graphème-phonème.

9. Dispositif selon l'une des revendications 6 à 8, **caractérisé en ce que** la seconde unité de conversion (13) est reliée côté sortie à une mémoire à vocabulaire (5a) d'une unité de reconnaissance vocale (5).
